# EUROPÄISCHE PATENTSCHRIFT

(11) **EP 2 547 558 B1**
(45) Veröffentlichungstag und Bekanntmachung des Hinweises auf die Patenterteilung: **05.03.2014**
(21) Anmeldenummer: 11712166.5
(22) Anmeldetag: 11.03.2011
(51) Int. Cl.: B60R 25/00

(54) **VERFAHREN ZUR SENSORISCHEN ERFASSUNG EINES BEDIENEREIGNISSES**
METHOD FOR DETECTING AN ACTION TO OPERATE A VEHICLE DOOR BY MEANS OF A SENSOR
MÉTHODE POUR DÉTECTER UNE ACTION D'UTILISATION D'UNE PORTE DE VÉHICULE PAR UN DÉTECTEUR

(30) Priorität: 17.03.2010 DE 102010011767
(43) Veröffentlichungstag der Anmeldung: 23.01.2013
(73) Patentinhaber: Brose Fahrzeugteile GmbH & Co. KG, Hallstadt, 96103 Hallstadt (DE)
(72) Erfinder: FUCHS, Thorsten, 96103 Hallstadt (DE); RUSS, Detlef, 96237 Ebersdorf (DE); HERING, Matthias, 91301 Forchheim (DE); WÜRSTLEIN, Holger, 97475 Zeil am Main (DE); MÜLLER, Danilo, 84149 Velden (DE); POHL, Florian, 96237 Ebersdorf (DE)
(74) Vertreter: Gottschald, Jan
(86) Internationale Anmeldenummer: PCT/EP2011/001203
(87) Internationale Veröffentlichungsnummer: WO 2011/113552

(56) Entgegenhaltungen:
- DE-A1- 10 106 400
- DE-A1-102006 037 237
- DE-A1-102008 063 366
- DE-A1-102009 017 404
- DE-B3-102005 032 402
- FR-A1- 2 920 172
- US-A1- 2006 092 278

## Beschreibung

Die Erfindung betrifft ein Verfahren zur sensorischen Erfassung eines Bedienereignisses gemäß dem Oberbegriff von Anspruch 1 und ein Kraftfahrzeug mit einem elektrischen Bordnetz zur Durchführung der obigen Verfahren gemäß Anspruch 12.

Ein solches Verfahren ist aus DE 10 2005 032 402 B gemäß Oberbegriff des Anspruchs 1 bekannt.

Die elektrischen Bordnetze heutiger Kraftfahrzeuge sind mit einer Vielzahl elektrischer Verbraucher ausgestattet, die zu einem erheblichen Teil der Realisierung von Komfortfunktionen dienen. Der Energieverbrauch solcher Bordnetze kann je nach Verbraucher auch im Standbetrieb beträchtlich sein, was im ungünstigsten Fall zu einem vollständigem Entladen der Fahrzeugbatterie führen kann. Dabei spielt neben dem Energieverbrauch der einzelnen elektrischen Ver braucher der Energieverbrauch des Bussystems des Bordnetzes eine besondere Rolle. Heutige Bussysteme sind nämlich in der Regel so ausgelegt, dass das Aufwecken eines Verbrauchers mit dem Aufwecken des gesamten Systems einhergeht, was den Energieverbrauch signifikant erhöht.

Eine der obigen Komfortfunktionen ist die sogenannte "Keyless-Entry-Funktion". Den bekannten Keyless-Entry-Sytemen ist gemeinsam, dass ein insbesondere funkbasierter Authentifizierungsdialog zwischen einer kraftfahrzeugseitigen Keyless-Entry-Steuereinheit und einem benutzerseitigen Funkschlüssel o. dgl. vorgesehen ist, um die Zugangsberechtigung des Benutzers zu überprüfen. Nach erfolgreichem Authentifizierungsdialog und ggf. weiteren Bedienereignissen wird das Kraftfahrzeug entriegelt und/oder je nach Auslegung, ggf. eine Klappe o. dgl. motorisch betätigt.

Eine bekannte Anordung mit Keyless-Entry-Funktion (DE 103 33 894 A1) sieht vor, dass die Keyless-Entry-Steuereinheit permanent oder zyklisch abfragt, ob ein Funkschlüssel für den Authentifizierungsdialog vorhanden ist. Da dies mit einem entsprechend permanenten oder zyklischen Entladen der Fahrzeugbatterie verbunden ist, wird vorgeschlagen, für die Keyless-Entry-Funktion einen zusätzlichen Energiespeicher vorzusehen.

Zur Reduzierung des Energieverbrauchs des Bordnetzes eine Kraftfahrzeugs wurde auch vorgeschlagen, die Steuereinheit zeitweise zumindest zum Teil in ei-nen energiesparenden Stand-by-Modus zu überführen und situationsgerecht in einen Betriebs-Modus aufzuwecken (DE 10 2004 027 541 A1). Eine Herausforderung bei diesem Verfahren ist das korrekte Schalten zwischen dem Stand-by-Modus und dem Betriebs-Modus, nämlich derart, dass weder eine Beeinträchtigung der jeweils gewünschten Funktion noch eine Anfälligkeit gegenüber äußeren Einflüssen oder Missbrauch gegeben ist.

Eine bekannte Anordnung mit Keyless-Entry-Funktion (DE 20 2005 020 140 U1) ist mit einer Sensoranordnung ausgestattet, der ein als Näherungssensor ausgestaltetes Sensorelement zugeordnet ist. Das Aufwecken der Keyless-EntrySteuereinheit und ggf. das motorische Öffnen einer Klappe o. dgl. wird hier durch ein Bedienereignis, das von dem Benutzer des Kraftfahrzeugs vorgenommen wird, ausgelöst. Bei dem Bedienereignis kann es sich um das Annähern des Benutzers an das Kraftfahrzeug, um eine Fußbewegung o. dgl. handeln. Von diesem Verfahren geht die vorliegende Erfindung aus.

Im Hinblick auf die oben angesprochene Bedeutung des geringen Energieverbrauchs bei Kraftfahrzeugen ist es natürlich von Bedeutung, dass auch die Sensoranordnung energieeffizient arbeitet. Dabei muss einerseits sichergestellt werden, dass auftretende Bedienereignisse sicher erfasst werden und dass eine irrtümliche Erfassung an sich nicht vorhandener Bedienereignisse ausbleibt. Die irrtümliche Erfassung eines Bedienereignisses führt nämlich zu einem ungewünschten Aufwecken der Keyless-Entry-Steuereinheit und damit des gesamten Bussystems, was mit einem beträchtlichen Energieaufwand verbunden ist.

Die obigen Forderungen der hohen Erfassungssicherheit einerseits und des geringen Energieverbrauchs andererseits stehen zueinander in Widerspruch und stellen eine Herausforderung bei der Auslegung des in Rede stehenden Verfahrens dar.

Der Erfindung liegt das Problem zu Grunde, das bekannte Verfahren derart auszugestalten und weiterzubilden, dass eine besonders hohe Erfassungssicherheit für ein Bedienereignis einerseits und ein besonders geringer Energieverbrauch im Standbetrieb andererseits gewährleistet ist.

Das obige Problem wird bei einem Verfahren gemäß dem Oberbegriff von Anspruch 1 durch die Merkmale des kennzeichnenden Teils von Anspruch 1 gelöst.

Wesentlich ist zunächst die grundsätzliche Überlegung, die Erfassung eines Bedienereignisses in eine Grobauswertung mit geringem Energieverbrauch und in eine Feinauswertung mit entsprechend höherem Energieverbrauch zu unterteilen. In Abhängigkeit von dem Ergebnis der Grobauswertung wird die Feinauswertung ausgelöst oder eben nicht ausgelöst.

Bei der Grobauswertung werden die Sensormesswerte auf das Auftreten eines Bedienanzeichens hin überprüft. Ein solches Bedienanzeichen ist beispielsweise eine erste Annäherung des Benutzers an das Kraftfahrzeug und lässt sich durch eine Schwellwertüberprüfung mit geringer Rechenleistung vornehmen.

Die Feinauswertung läuft beispielsweise auf eine Auswertung des zeitlichen Verlaufs der jeweiligen Sensormesswerte hinaus und erfordert eine entsprechend höhere Rechenleistung. An Rechenleistung muß an dieser Stelle auch nicht gespart werden, da die Feinauswertung ja nur durchgeführt wird, wenn die Grobauswertung ein obiges Bedienanzeichen erfasst hat, also bereits eine gewisse Wahrscheinlichkeit dafür besteht, dass ein Bedienereignis tatsächlich vorliegt.

Mit der Grobauswertung lassen sich im Ergebnis Bedienanzeichen erfassen, die durch die Feinerfassung als Bedienereignis verifiziert werden. Über den größten Teil der Lebenszeit der Anordnung läuft damit die Grobauswertung, und nicht die Feinauswertung, so dass sich insgesamt eine günstige Energiebilanz ergibt.

Die vorschlagsgemäße Lösung umfasst einen weiteren Aspekt, der eine besonders hohe Erfassungssicherheit bei der Feinauswertung garantiert. Vorschlagsgemäß nimmt die Sensorsteuerung nämlich eine fortlaufende Zwischenspeicherung einer vorbestimmten Anzahl der jeweils letzten Sensormesswerte zumindest eines Sensorelements vor und stellt diese zwischengespeicherten Sensormesswerte der Feinauswertung zur Verfügung.

Wird die Feinauswertung also in einem bestimmten Auslösezeitpunkt ausgelöst, so stehen für die Feinauswertung nicht nur die ab dem Auslösezeitpunkt ermittelten Sensormesswerte zur Verfügung, sondern eben auch vor dem Auslösezeitpunkt liegende Sensormesswerte. Die vor dem Auslösezeitpunkt liegenden Sensormesswerte gehen bei der Feinauswertung nicht verloren.

Mit der vorschlagsgemäßen Lösung lässt sich eine besonders hohe Erfassungssicherheit bei geringem Energieverbrauch im Standbetrieb garantieren. Dies zeigt sich besonders deutlich, wenn das vorschlagsgemäße Verfahren in einem elektrischen Bordnetz eines Kraftfahrzeugs Anwendung findet (Ansprüche 2, 3).

Es hat sich nämlich in Versuchen gezeigt, dass das irrtümliche Aufwecken von Teilen des Bordnetzes, insbesondere des Bussystems, verglichen mit dem üblichen Leerlauf-Energieverbrauch ganz beträchtlich ist. Die Reduzierung von Fehlauslösungen, die nicht zuletzt durch die zuverlässige Feinauswertung erzielbar ist, zeigt die Vorteilhaftigkeit der Anwendung des vorschlagsgemäßen Verfahrens in einem elektrischen Bordnetz eines Kraftfahrzeugs.

Bei der bevorzugten Ausgestaltung gemäß Anspruch 7 handelt es sich bei dem zu erfassenden Bedienereignis um eine Fußbewegung des Benutzers, gemäß Anspruch 8 um eine Hin- und Rückbewegung des Fußes des Benutzers. Natürlich sind hier beliebige andere Bedienereignisse, insbesondere unterschiedliche Benutzergesten o. dgl. denkbar.

Um die Erfassungssicherbeit insbesondere bei der Feinauswertung zu erhöhen, ist es gemäß den Ansprüchen 9 bis 11 vorzugsweise vorgesehen, dass die Sensormesswerte zumindest eines Sensorelements einer Auswertung nach Art einer Mustererkennung unterzogen werden.

Die grundlegende Konzeption bei der Mustererkennung besteht darin, dass ggf. vorgefilterte Sensormesswerte zunächst einer Merkmalsextraktion unterzogen werden. Die zu extrahierenden Merkmale sind so auszuwählen, dass sie "trennungswirksam" sind. Dies bedeutet, dass die Merkmale geeignet sein müssen, den Zustand "mit Bedienereignis" von dem Zustand "ohne Bedienereignis" zu unterscheiden (Christopher M. Bishop: Pattern Recognition and M achine Learning. Springer, Berlin 2006, ISBN 0-387-31073-8).

Nach der Merlamalsreduktion wird eine Klassifikation vorgenommen, in der die Ausbildung der extrahierten Merkmale bestimmten Klassen von zu erfassenden Mustern, hier Situationen, zugeordnet werden.

Aus der Literatur sind eine Reihe sogenannter "Klassifikatoren" bekannt, die sich vorteilhaft auch im vorliegenden Bereich anwenden lassen. Nur beispielhaft seien die Klassifikatoren "Fenster", "Euklidischer Abstand", "Nächster Nachbar", "Kennfeld", "Fuzzylogic" und "Neuronale Netze" genannt.

Nach einer weiteren Lehre gemäß Anspruch 12, der ebenfalls eigenständige Bedeutung zukommt, wird ein Kraftfahrzeug mit einem elektrischen Bordnetz zur Durchführung der vorschlagsgemäßen Verfahren beansprucht. Zur Erläuterung dieser weiteren Lebre darf auf alle die vorschlagsgemäßen Verfahren betreffenden Ausführungen verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines vorschlagsgemäßen Kraftfahrzeugs zur Durchführung der vorschlagsgemäßen Verfahren,
- Fig. 2: ein Ablaufdiagram für das erstgenannte vorschlagsgemäße Verfahren in einer ganz schematischen Darstellung und
- Fig. 3: zwei beispielhafte Signalverläufe der beiden Sensorelemente gemäß Fig. 1 während eines Bedienereignisses.

Das vorschlagsgemäße Verfahren zur sensorischen Erfassung eines Bedienereignisses wird im Folgenden anhand eines Bedienereignisses erläutert, wobei das Bedienereignis von einem Benutzer eines Kraftfahrzeugs erzeugt wird. Das vorschlagsgemäße Verfahren kann aber für alle denkbaren Bereiche, in denen es um die sensorische Erfassung von Bedienereignissen geht, Anwendung finden.

Die sensorische Erfassung des Bedienereignisses erfolgt vorschlagsgemäß mittels einer Sensoranordnung 1, der mindestens ein hier und vorzugsweise als Näherungssensor ausgestaltetes Sensorelement 2, 3 und eine Sensorsteuerung 4 zugeordnet sind. Bei dem hier dargestellten Ausführungsbeispiel handelt es sich um eine Sensoranordnung 1 mit zwei Sensorelementen 2, 3, wie im Folgenden noch erläutert wird.

Für die Definition des zu erfassenden Bedienereignisses sind zahlreiche Varianten denkbar. Hier und vorzugsweise ist das Bedienereignis eine Fußbewegung des Benutzers des Kraftfahrzeugs, wie noch erläutert wird.

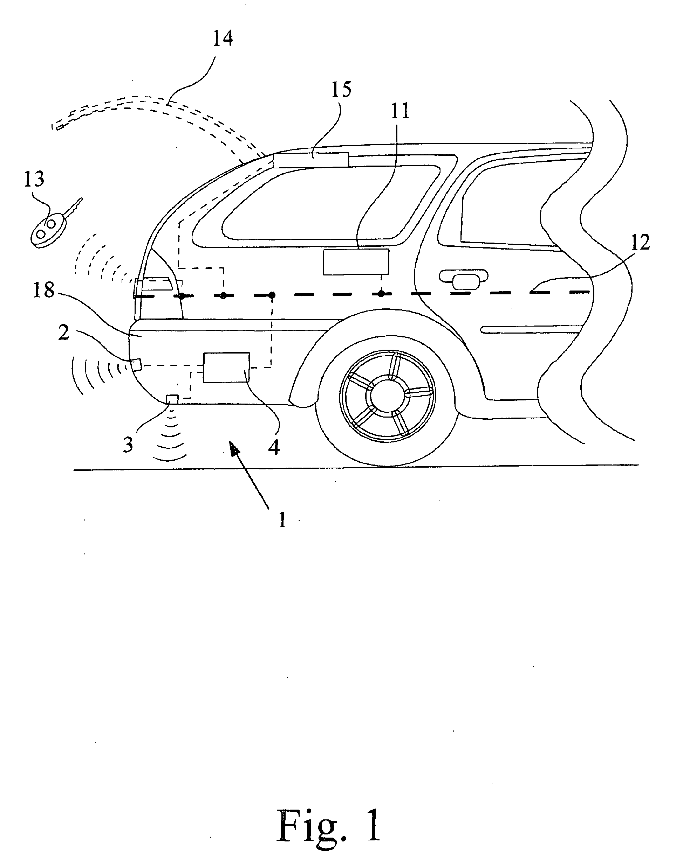

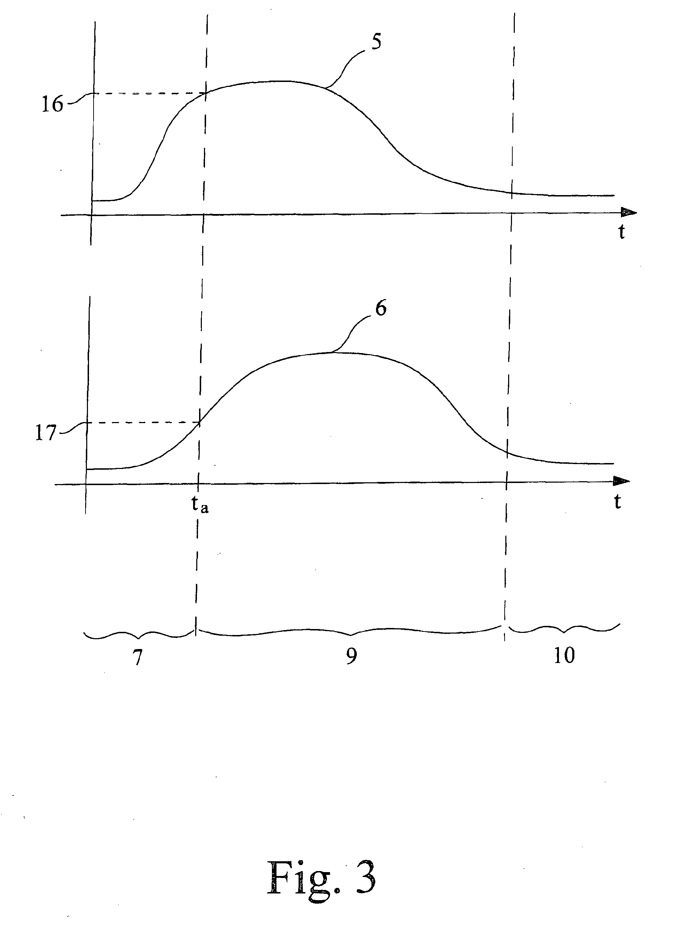

Die von den beiden Sensorelementen 2, 3 erzeugten Sensorsignale 5, 6 sind in Fig. 3 dargestellt. Dabei zeigt Fig. 3 oben das Sensorsignal 5 des in Fig. 1 oberen Sensorelements 2 und Fig. 3 unten das Sensorsignal 6 des in Fig. 1 unteren Sensorelements 3.

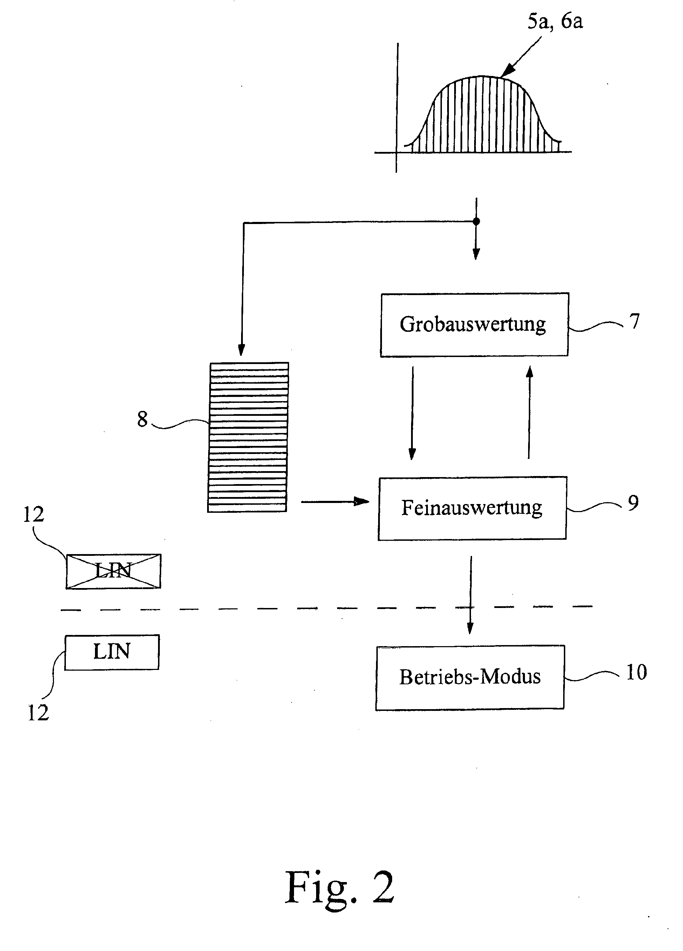

Die obigen Sensorsignale 5, 6 werden in üblicher Weise mit einer Abtastrate in einem A/D-Wandler digitalisiert. Aus den kontinuierlichen Sensorsignalen 5, 6 werden so diskrete Sensormesswerte 5a, 6a ermittelt, die in Fig. 2 lediglich schematisch dargestellt sind.

Es ergibt sich aus der Darstellung gemäß Fig. 2, dass die Sensormesswerte 5a, 6a einer ersten Grobauswertung 7 zugeführt werden. Im Rahmen der Grobauswertung 7 werden die Sensormesswerte 5a, 6a auf das Auftreten eines Bedienanzeichens hin überprüft. Es wurde schon darauf hingewiesen, dass beim Auftreten eines Bedienanzeichens eine gewisse Wahrscheinlichkeit dafür besteht, dass tatsächlich das eigentlich zu erfassende Bedienereignis vorliegt. Es kann sich bei dem Bedienanzeichen beispielsweise um einen gewissen Anstieg der Sensor-messwerte 5a, 6a mindestens eines der Sensorelemente 2, 3 handeln, wie noch erläutert wird.

Es lässt sich ebenfalls der Darstellung in Fig. 2 entnehmen, dass die Sensormesswerte 5a, 6a hier fortlaufend in einem FIFO (First-in, First-out) Zwischenspeicher 8 abgelegt werden. Dies ist nichts anderes als eine fortlaufende Zwischenspeicherung einer vorbestimmten Anzahl der jeweils letzten Sensormesswerte 5a, 6a zumindest eines Sensorelements 2, 3.

Die Anzahl der zwischengespeicherten Sensormeßwerte 5a, 6a entspricht vorzugsweise etwa der Anzahl der Meßwerte, die in der Grobauswertung für die Erfassung des Bedienanzeichens benötigt werden.

Die Erfassung eines Bedienanzeichens löst eine Feinauswertung 9 der Sensormesswerte 5a, 6a zur Verifizierung des Auftretens eines Bedienereignisses in einem gewissen Auslösezeitpunkt t_{A} aus.

Wesentlich ist nun die Tatsache, dass die Feinauswertung 9 auf den zwischengespeicherten Sensormesswerten 5a, 6a und auf den zeitlich darauffolgenden Sensormesswerten 5a, 6a basiert, so dass in die Feinauswertung 9 sowohl vor als auch nach dem Auslösezeitpunkt t_{A} liegende Sensormesswerte 5a, 6a eingehen.

Der letztgenannte Aspekt zeigt sich am besten in der Darstellung gemäß Fig. 3. Die Feinauswertung 9 umfasst hier die Sensormesswerte 5a, 6a zu den Sensorsignalen 5, 6 sowohl links von dem Auslösezeitpunkt t_{A} als auch rechts von dem Auslösezeitpunkt t_{A}.

Um sicherzustellen, dass der Feinauswertung 8 auch die in Fig. 3 rechts vom Auslösezeitpunkt t_{A} liegenden Sensormesswerte 5a, 6a zur Verfügung stehen, wird vorzugsweise auch nach dem Auslösen der Feinauswertung 9 der Zwischenspeicher 8 weiter fortlaufend mit den Sensormesswerten 5a, 6a beschrieben.

Sofern in der Feinauswertung 9 kein Bedienereignis erfasst werden kann, wird die Feinauswertung 9 beendet und wie oben weiter die Grobauswertung 7 vorgenommen. Dies ist in Fig. 2 durch den nach oben weisenden Pfeil zwischen der Feinauswertung 9 und der Grobauswertung 7 dargestellt. Grundsätzlich ist es auch denkbar, dass die Großbauswertung 7 stets, also auch gleichzeitig zu der Feinauswertung 9 läuft. Dies kann im Falle einer mehrmaligen Betätigung vorteilhaft sein.

Sowohl die Grobauswertung 7 als auch die Feinauswertung 9 werden vorzugsweise in der Sensorsteuerung 4 vorgenommen. Insbesondere laufen beide Auswertungen 7, 9 auf ein und derselben Hardware, insbesondere auf ein und demselben Microcontroller. Auch der Zwischenspeicher 8 ist vorzugsweise in der Sensorsteuerung 4 untergebracht.

Bei dem dargestellten und insoweit bevorzugten Ausführungsbeispiel wird das vorschlagsgemäße Verfahren auf ein Kraftfahrzeug mit einem elektrischen Bordnetz angewendet, wobei zumindest Teile des Bordnetzes ausgehend von einem energiesparenden Stand-by-Modus in einen Betriebs-Modus aufweckbar sind. Das Bordnetz weist hier und vorzugsweise eine insbesondere als KeylessEntry-Steuereinheit ausgestaltete Steuereinheit 11 auf, wobei nach erfolgreicher Verifizierung in der Feinauswertung 9 zumindest ein Teil des übrigen Bordnetzes, hier jedenfalls die Steuereinheit 11 und das in Fig. 1 dargestellte Bussystem 12, von der Sensorsteuerung 9 in den Betriebs-Modus 10 aufgeweckt werden. Grundsätzlich ist es hier auch denkbar, dass die Steuereinheit 11, und nicht das gesamte Bussystem 12, aufgeweckt wird, nämlich wenn die Steuereinheit 11 direkt oder nur über einen Teilbus mit der Sensorsteuerung 4 verbunden ist.

Es darf an dieser Stelle darauf hingewiesen werden, dass für das Bussystem 12 alle Arten von Bussystemen Anwendung finden können. Nur beispielhaft ist in Fig. 2 ein LIN-Bussystem angedeutet.

Es sind vorliegend zahlreiche Möglichkeiten für die Realisierung der Steuerungsstruktur denkbar. Möglich ist beispielsweise, dass die Steuereinheit 11 mit der Sensorsteuerung 9 zu einer Steuerung mit gemeinsamer Hardware kombiniert werden.

Das obige Aufwecken der Steuereinheit 11 löst einen insbesondere funkbasierten Authentifizierungsdialog mit einem Funkschlüssel 13 des Benutzers aus, wobei hier und vorzugsweise nach erfolgreichem Authentifizierungsdialog eine Klappe 14, hier die Heckklappe 14 des Kraftfahrzeugs, motorisch geöffnet wird. Hierfür ist ein Klappenantrieb 15 vorgesehen. Denkbar ist, dass der motorischen Öffnung der Heckklappe 14 die Erfassung eines weiteren Bedienereignisses durch die Sensoranordnung 1 vorausgehen muss. Dies kann beispielsweise notwendig sein, um sicherzustellen, dass sich der Benutzer während der motorischen Verstellung der Heckklappe 14 außerhalb des Bewegungsbereichs der Heckklappe 14 befindet.

Für die Ausgestaltung des Zwischenspeichers 8 können je nach Anwendungsfall verschiedene Varianten vorteilhaft sein. Insbesondere kann für die Sensormesswerte 5a, 6a jedes Sensorelements 2, 3 ein eigener Zwischenspeicher 8 vorgesehen sein. Bei dem dargestellten Ausführungsbeispiel ist lediglich ein einziger Zwischenspeicher 8 dargestellt.

Für die konkrete Realisierung des Zwischenspeichers 8 wird die Verwendung eines FIFO-Speichers oder eines Ringspeichers vorgeschlagen. Damit lässt sich die Zwischenspeicherung nur einer vorbestimmten Anzahl von Sensormesswerten 5a, 6a mit geringem Hardwareaufwand realisieren.

Es lässt sich der Darstellung gemäß Fig. 2 die Tatsache entnehmen, dass die Grobauswertung 7 unmittelbar auf die Sensormesswerte 5a, 6a, und nicht auf den Zwischenspeicher 8 zugreift. Der Grund hierfür besteht darin, dass die Grobauswertung 7 möglichst schnell erfolgen soll, um einen frühzeitigen Auslösezeitpunkt t_{A} und damit eine schnelle Erfassung des Bedienereignisses insgesamt zu gewährleisten.

Sofern in der Grobauswertung 7 aber eine Überprüfung des Verlaufs der Sensormesswerte 5a, 6a erfolgen soll, kann es vorteilhaft sein, dass die Grobauswertung 7 auf den Zwischenspeicher 8 zugreift.

Grundsätzlich kann es vorgesehen sein, dass die Abtastrate bei der Digitalisierung für die Grobauswertung 7 und für die Feinauswertung 9 im Wesentlichen identisch ist. Damit ist sichergestellt, dass die im Zwischenspeicher 8 abgelegten Sensormesswerte 5a, 6a, die ja bei der Feinauswertung 9 genutzt werden, auf eine entsprechend hohe Abtastrate zurückgehen.

Um den Energieverbrauch für die Grobauswertung 7 gering zu halten, kann es aber auch vorgesehen sein, dass die Abtastrate bei der Grobauswertung 7 geringer als bei der Feinauswertung 9 ist. Grundsätzlich ist es hier auch denkbar, die Abtastrate in Abhängigkeit von der Dynamik der zu erwartenden Sensorsignale 5, 6 während der jeweiligen Auswertung 7,9 anzupassen.

Die Grobauswertung 7 und die Feinauswertung 9 sind vorschlagsgemäß so ausgelegt, dass die Stromaufnahme und damit die Leistungsaufnahme bei der Grobauswertung 7 erheblich geringer als bei der Feinauswertung 9 ist. Versuche haben ergeben, dass sich eine Stromaufnahme bei der Grobauswertung 7 von unter 200 µA erzielen lässt. Bei der Feinauswertung 9 hat sich mit dem vorschlagsgemäßen Verfahren eine Stromaufnahme von weniger als 5 mA eingestellt. Im Vergleich dazu ist das Aufwecken des Bussystems 12 zusammen mit der Steuereinheit 11 mit einer Stromaufnahme von zeitweise bis zu 20 A verbunden.

Um die obigen Rahmenbedingungen hinsichtlich geringer Stromaufnahme zu erfüllen, ist es vorzugsweise vorgesehen, dass das Bedienanzeichen lediglich als erste Annäherung des Benutzers an die Sensoranordnung 1 definiert ist, die in der Grobauswertung 7 über ein Überschreiten eines Schwellwerts 16, 17 durch die Sensormesswerte 5a, 6a oder ein Überschreiten einer Grenz-Steigung des zeitlichen Verlaufs der Sensormesswerte 5a, 6a erfasst wird. Hier und vorzugsweise ist es so, dass beiden Sensorelementen 2, 3 jeweils ein Schwellwert 16, 17 zugeordnet sind, wobei das Bedienanzeichen bei Überschreiten beider Schwellwerte 16, 17 als erfasst gilt. Ein Blick auf die Darstellung gemäß Fig. 3 zeigt, dass bei Überschreiten der beiden Schwellwerte 16, 17 ein Bedienereignis mit einiger Wahrscheinlichkeit tatsächlich vorliegt.

Das Bedienereignis selbst ist hier und vorzugsweise als vorbestimmte Benutzerbewegung definiert, die in der Feinauswertung 9 über den Verlauf der Sensormesswerte 5a, 6a erfasst wird. Dies lässt sich über die Abfrage bestimmter Grenzwerte der Sensormesswerte 5a, 6a oder mit einer noch zu erläuternden Mustererkennung umsetzen.

Es darf darauf hingewiesen werden, dass der Feinauswertung 9 grundsätzlich eine weitere Feinauswertung bzw. mehrere weitere Feinauswertungen nachgeschaltet werden kann bzw. können. Denkbar ist auch, den Rechenaufwand während der Auswertung und damit die Genauigkeit bei der Auswertung mit steigender Erfassungswahrscheinlichkeit kontinuierlich zu erhöhen.

Vorliegend handelt es sich bei dem Bedienereignis wie schon angesprochen um eine Fußbewegung des Benutzers, wobei die Sensoranordnung 1 mindestens zwei, hier genau zwei, als Näherungssensoren ausgestaltete Sensorelemente 2, 3 aufweist, die, wie in Fig. 1 dargestellt, in oder an einem hinteren Verkleidungsteil 18, hier und vorzugsweise dem hinteren Stossfänger 18, des Kraftfahrzeugs angeordnet sind. Dabei handelt es sich bei den beiden Sensorelementen 2, 3 um kapazitive Näherungssensoren mit Elektroden, die sich jeweils über einen wesentlichen Teil der Breite des Kraftfahrzeugs erstrecken. Damit ist gewährleistet, dass die Erfassung des Bedienereignisses entsprechend über den wesentlichen Teil der Breite des Kraftfahrzeugs möglich ist.

Es lässt sich der Darstellung gemäß Fig. 1 entnehmen, dass der schematisch dargestellte Erfassungsbereich des oberen Sensorelements 5 jedenfalls auch nach hinten weist und dass der Erfassungsbereich des unteren Sensorelements 6 jedenfalls auch nach unten weist. Diese Sensoranordnung 1 führt entsprechend zu den in Fig. 3 dargestellten Sensorsignalverläufen 5, 6.

Vorzugsweise ist als Bedienereignis die Hin- und Rückbewegung des Fußes des Benutzers definiert, wobei während des Bedienereignisses beide Sensorelemente 2, 3 einen impulsartigen zeitlichen Verlauf der Sensormesswerte 5a, 6a, der hier entsprechend als "Sensorimpuls" bezeichnet wird, erzeugen. Auch dies lässt sich der Darstellung gemäß Fig. 3 gut entnehmen.

Versuche haben nun gezeigt, dass eine Benutzerbewegung, die als Bedienereignis erfasst werden soll, qualitativ stets die in Fig. 3 dargestellten Signalverläufe aufweist. Natürlich zeigen sich hier bei jeder Bedienung und insbesondere bei der Bedienung durch unterschiedliche Benutzer Abweichungen, die nicht dazu führen dürfen, dass ein vorhandenes Bedienereignis nicht erkannt wird. Hier können die im allgemeinen Teil der Beschreibung angesprochenen, bekannten Verfahren der Mustererkennung weiterhelfen.

Als Grundlage für die Mustererkennung werden dem für das zu erfassende Bedienereignis typischen Verlauf der Sensormesswerte 5a, 6a zumindest eines Sensorelements 2, 3 eine Reihe von Merkmalen zugeordnet. Im Rahmen der Mustererkennung werden diese Merkmale zunächst aus den Sensormesswerten 5a, 6a extrahiert und anschließend klassifiziert. Dies erfolgt vorzugsweise bei der Feinauswertung 9 und alternativ oder zusätzlich bei der Grobauswertung 7.

Als zu extrahierende Merkmale lassen sich die Breite, die Höhe, die Flankensteilheit, die Krümmung der Sensorimpulse, der zeitliche Versatz zweier Sensorimpulse eines Sensorelements 5, 6 o. dgl. definieren. Im Rahmen der Klassifikation werden diese Merkmale dann auf Grenzwerte oder Grenzbereiche hin überprüft.

Weitere denkbare Merkmale sind der zeitliche Versatz der Sensorimpulse zweier Sensorelemente 2, 3 oder eine vorbestimmte Korrelation, insbesondere die Kreuzkorrelation der Sensorsignale 5, 6 zweier Sensorelemente 2, 3 zueinander. Auch diese Merkmale lassen sich mit Hilfe von Grenzwerten und Grenzbereichen derart klassifizieren, dass ggf. zusammen mit den zuvor genannten Merkmalen ein Rückschluss auf das Auftreten oder Nichtauftreten eines Bedienereignisses möglich ist.

Vor dem Hintergrund der Ähnlichkeit und des Zeitversatzes der beiden, durch das Bedienereignis der Hin- und Rückbewegung des Fußes des Benutzers erzeugten Sensorimpulse hat sich die Ermittlung einer Korrelation, insbesondere der Kreuzkorrelation, als besonders effizient herausgestellt. Bei der Klassifikation kann, hier insbesondere geprüft werden, ob die Lage des Maximums der Korrelationsfunktion in vorbestimmten, dem Bedienereignis zugeordneten Grenzen liegt.

Nach einer weiteren Lehre, der ebenfalls eigenständige Bedeutung zukommt, wird ein Kraftfahrzeug mit einem elektrischen Bordnetz beansprucht, das sich zur Durchführung der vorschlagsgemäßen Verfahrens eignet. Auf alle obigen Ausführungen, die zur Erläuterung des Kraftfahrzeugs geeignet sind, darf verwiesen werden.

## Patentansprüche

1. Verfahren zur sensorischen Erfassung eines Bedienereignisses mittels einer Sensoranordnung (1) mit mindestens einem insbesondere als Näherungssensor ausgestalteten Sensorelement (2, 3) und einer Sensorsteuerung (4), wobei in der Sensorsteuerung (4) eine Digitalisierung der Sensorsignale (5, 6) in Sensormesswerte (5a, 6a) vorgenommen wird, wobei das Bedienereignis von einem Benutzer insbesondere eines Kraftfahrzeugs erzeugt wird,
**dadurch gekennzeichnet,**
**dass** eine erste Grobauswertung (7) der Sensormesswerte (5a, 6a) auf das Auftreten eines Bedienanzeichens hin vorgenommen wird,
**dass** fortlaufend eine Zwischenspeicherung einer vorbestimmten Anzahl der jeweils letzten Sensormesswerte (5a, 6a) zumindest eines Sensorelements (2, 3) in einem Zwischenspeicher (8) vorgenommen wird,
**dass** die Erfassung eines Bedienanzeichens eine Feinauswertung (9) der Sensormesswerte (5a, 6a) zur Verifizierung des Auftretens eines Bedienereignisses in einem Auslösezeitpunkt (t_{A}) auslöst und
**dass** die Feinauswertung (7) auf den zwischengespeicherten Sensormesswerten (5a, 6a) und auf den zeitlich darauffolgenden Sensormesswerten (5a, 6a) basiert, so dass in die Feinauswertung (9) sowohl vor als auch nach dem Auslösezeitpunkt (t_{A}) liegende Sensormesswerte (5a, 6a) eingehen.

2. Verfahren nach Anspruch 1, **dadurch gekennzeichnet,dass** ein elektrisches Bordnetz eines Kraftfahrzeugs vorgesehen ist, dass zumindest Teile des Bordnetzes ausgehend von einem energiesparenden Standby-Modus in einen BetriebsModus aufweckbar sind, dass das Bordnetz eine insbesondere als Keyless-Entry-Steuereinheit ausgestaltete Steuereinheit (11) aufweist und dass nach erfolgreicher Verifizierung zumindest ein Teil des übrigen Bordnetzes, insbesondere die Steuereinheit (11) und/oder ein ggf. vorhandenes Bussystem (12), von der Sensorsteuerung in den Betriebsmodus (10) aufgeweckt wird bzw. werden.

3. Verfahren nach Anspruch 2, **dadurch gekennzeichnet, dass** das Aufwecken der Steuereinheit (11) einen insbesondere funkbasierten Authentifizierungsdialog mit einem Funkschlüssel des Benutzers auslöst, und, vorzugsweise, dass nach erfolgreichem Authentifizierungsdialog und ggf. nach der Erfassung eines weiteren Bedienereignisses durch die Sensoranordnung (1) eine Klappe (14), insbesondere eine Heckklappe (14), des Kraftfahrzeugs motorisch geöffnet wird.

4. Verfahren nach einem der vorhergehenden Ansprüche, **dadurch gekennzeichnet, dass** die Abtastrate bei der Digitalisierung für die Grobauswertung (7) und für die Feinauswertung (9) im Wesentlich identisch ist, oder, dass die Abtastrate zur Ermittlung der Sensormesswerte (5a, 6a) aus den Sensorsignalen (5, 6) bei der Grobauswertung (7) geringer als bei der Feinauswertung (9) ist.

5. Verfahren nach eines der vorhergehenden Ansprüche, **dadurch gekennzeichnet, dass** das Bedienanzeichen als erste Annäherung des Benutzers an die Sensoranordnung (1) definiert ist, die in der Grobauswertung (7) über ein Überschreiten eines Schwellwerts (16, 17) durch die Sensormesswerte (5a, 6a) oder ein Überschreiten einer Grenz-Steigung des zeitlichen Verlaufs der Sensormesswerte (5a, 6a) zumindest eines Sensorelements (2, 3) erfasst wird.

6. Verfahren nach einem der vorhergehenden Ansprüche, **dadurch gekennzeichnet, dass** das Bedienereignis als vorbestimmte Benutzerbewegung definiert ist, die in der Feinauswertung (9) über den zeitlichen Verlauf der Sensormesswerte (5a, 6a) erfasst wird.

7. Verfahren nach Anspruch 5 oder 6, **dadurch gekennzeichnet, dass** das Bedienereignis als Fußbewegung des Benutzers definiert ist und dass die Sensoranordnung (1) mindestens zwei als Näherungssensoren ausgestaltete Sensorelemente (2, 3) aufweist, die in oder an einem hinteren Verkleidungsteil (18), insbesondere dem hinteren Stoßfänger, eines Kraftfahrzeugs angeordnet sind und die sich vorzugsweise über einen wesentlichen Teil der Breite des Kraftfahrzeugs erstrecken, dass der Erfassungsbereich eines Sensorelements (2, 3) jedenfalls auch nach hinten weist und dass der Erfassungsbereich des anderen Sensorelements (2, 3) jedenfalls auch nach unten weist.

8. Verfahren nach Anspruch 7, **dadurch gekennzeichnet, dass** als Bedienereignis eine Hin- und Rückbewegung des Fußes des Benutzers definiert ist und dass während des Bedienereignisses beide Sensorelemente (2, 3) einen impulsartigen zeitlichen Verlauf der Sensormesswerte (5a, 6a) - Sensorimpuls - erzeugen.

9. Verfahren nach einem der vorhergehenden Ansprüche, **dadurch gekennzeichnet, dass** dem für das Bedienereignis typischen Verlauf der Sensormesswerte (5a, 6a) zumindest eines Sensorelements (2, 3) eine Reihe von Merkmalen zugeordnet sind, die zur Grobauswertung und/oder zur Feinauswertung nach Art einer Mustererkennung zunächst aus den Sensormesswerten (5a, 6a) extrahiert und anschließend klassifiziert werden.

10. Verfahren nach Anspruch 8 und ggf. nach Anspruch 9, **dadurch gekennzeichnet, dass** die Merkmale als Breite und/oder als Höhe und/oder als Flankensteilheit und/oder als Krümmung von Teilen der Sensorimpulse und/oder als zeit-Jicher Versatz zweier Sensorimpulse eines Sensorelements (2, 3) definiert sind.

11. Verfahren nach den Ansprüchen 8 und 9 und ggf. nach Anspruch 10, **dadurch gekennzeichnet, dass** die Merkmale als zeitlicher Versatz der Sensorimpulse zweier Sensorelemente (2, 3) und/oder als vorbestimmte Korrelation, insbesondere als Kreuzkorrelation der Sensorsignale (5, 6) zweier Sensorelemente zueinander definiert sind.

12. Kraftfahrzeug mit einem elektrischen Bordnetz zur Durchführung der Verfahren nach einem der vorhergehenden Ansprüche.

## Claims

1. Method for the sensor detection of an operator control event by means of a sensor arrangement (1) having at least one sensor element (2, 3), which is particularly in the form of a proximity sensor, and a sensor controller (4), wherein the sensor controller (4) digitizes the sensor signals (5, 6) into sensor measured values (5a, 6a), wherein the operator control event is produced by a user, particularly of a motor vehicle,
**characterized**
**in that** a first coarse evaluation (7) of the sensor measured values (5a, 6a) for the occurrence of a sign of operator control is performed,
**in that** a predetermined number of the respective last sensor measured values (5a, 6a) from at least one sensor element (2, 3) is progressively bufferstored in a buffer store (8),
**in that** the detection of a sign of operator control initiates a fine evaluation (9) of the sensor measured values (5a, 6a) for the purpose of verifying the occurrence of an operator control event at an initiation time (t_{A}), and
**in that** the fine evaluation (9) is based on the buffer-stored sensor measured values (5a, 6a) and on the chronologically subsequent sensor measured values (5a, 6a), so that the fine evaluation (9) includes sensor measured values (5a, 6a) situated both before and after the initiation time (t_{A}).

2. Method according to Claim 1, **characterized in that** an electrical system for a motor vehicle is provided, **in that** at least parts of the vehicle electrical system can be woken from a power-saving standby mode into an operating mode, **in that** the vehicle electrical system has a control unit (11), particularly in the form of a keyless entry control unit, and **in that** following successful verification at least part of the remainder of the vehicle electrical power supply system, particularly the control unit (11) and/or a bus system (12) which may be present, is/are woken by the sensor controller into the operating mode (10).

3. Method according to Claim 2, **characterized in that** the waking of the control unit (11) initiates an, in particular radio-based, authentication dialog with a radio key of the user, and, preferably, **in that** following a successful authentication dialog and possibly following the detection of a further operator control event by the sensor arrangement (1) a hatch (14), particularly a rear hatch (14), on the motor vehicle is opened by motor.

4. Method according to one of the preceding claims, **characterized in that** the sampling rate for the digitization is essentially identical for the coarse evaluation (7) and for the fine evaluation (9), or **in that** the sampling rate for ascertaining the sensor measured values (5a, 6a) from the sensors signals (5, 6) is lower for the coarse evaluation (7) than for the fine evaluation (9).

5. Method according to one of the preceding claims, **characterized in that** the sign of operator control is defined as a first approach by the user to the sensor arrangement (1), which is detected in the coarse evaluation (7) by means of a threshold value (16, 17) being exceeded by the sensor measured values (5a, 6a) or a critical slope for the time profile of the sensor measured values (5a, 6a) from at least one sensor element (2, 3) being exceeded.

6. Method according to one of the preceding claims, **characterized in that** the operator control event is defined as a predetermined user movement which is detected in the fine evaluation (9) by means of the time profile of the sensor measured values (5a, 6a).

7. Method according to Claim 5 or 6, **characterized in that** the operator control event is defined as a foot movement by the user and **in that** the sensor arrangement (1) has at least two sensor elements (2, 3), in the form of proximity sensors, which are arranged in or on a rear fairing portion (18), particularly the rear bumper, of a motor vehicle and which preferably extend over an essential portion of the width of the motor vehicle, **in that** the detection range of one sensor element (2, 3) also points rearward at any rate and **in that** the detection range of the other sensor element (2, 3) also points downward at any rate.

8. Method according to Claim 7, **characterized in that** the operator control event defined is a to and fro movement by the foot of the user and **in that** during the operator control event both sensor elements (2, 3) produce a pulsed time profile for the sensor measured values (5a, 6a) - sensor pulse.

9. Method according to one of the preceding claims, **characterized in that** the profile of the sensor measured values (5a, 6a) from at least one sensor element (2, 3) which ie typical of the operator control event has an associated series of features which are first of all extracted from the sensor measured values (5a, 6a) and are then classified, in the manner of pattern recognition, for the purpose of coarse evaluation and/or for the purpose of fine evaluation.

10. Method according to Claim 8 and possibly according to Claim 9, **characterized in that** the features are defined as the width and/or as the height and/or as the edge gradient and/or as the curvature of portions of the sensor pulses and/or as a time offset between two sensor pulses from a sensor element (2, 3).

11. Method according to Claims 8 and 9 and possibly according to Claim 10, **characterized in that** the features are defined as a time offset between the sensor pulses from two sensor elements (2, 3) and/or as a predetermined correlation, particularly as a cross-correlation, for the sensor signals (5, 6) from two sensor elements relative to one another.

12. Motor vehicle having an electrical system for carrying out the methods according to one of the preceding claims.

## Revendications

1. Procédé de détection par capteurs d'un événement de commande au moyen d'un ensemble (1) de capteurs qui présente au moins un élément de capteur (2, 3) configuré en particulier comme capteur de proximité et une commande (4) de capteur,
une numérisation des signaux (5, 6) du ou des capteurs en valeurs de mesure (5a, 6a) de capteur étant réalisée dans la commande (4) de capteur, l'événement de commande étant formé par l'utilisateur en particulier d'un véhicule automobile,
**caractérisé en ce que**
une première évaluation grossière (7) des valeurs de mesure (5as, 6a) de capteur est réalisée en termes d'apparition d'une indication de commande,
**en ce qu'**une conservation intermédiaire d'un nombre prédéterminé des dernières valeurs de mesure (5a, 6a) de capteur d'au moins un élément de capteur (2, 3) est réalisée en permanence dans une mémoire intermédiaire (8),
la détection d'une indication de commande déclenche une évaluation fine (9) des valeurs de mesure (5a, 6a) de capteur pour vérifier si un événement de commande est survenu à un instant de déclenchement (t_{A}) et
**en ce que** l'évaluation fine (9) est basée sur les valeurs de mesure (5a, 6a) de capteur temporairement conservées et sur les valeurs de mesure (5a, 6a) de capteur qui suivent de telle sorte que les valeurs de mesure (5a, 6a) de capteur situées aussi bien avant qu'après l'instant de déclenchement (t_{A}) interviennent dans l'évaluation fine (9).

2. Procédé selon la revendication 1, **caractérisé en ce qu'**un réseau électrique de bord d'un véhicule automobile est prévu, **en ce qu'**au moins des parties du réseau de bord peuvent être commutées d'un mode d'attente économe en énergie en un mode de fonctionnement, **en ce que** le réseau de bord présente une unité de commande (11) configurée en particulier comme unité de commande à entrée sans clé et **en ce que** lorsque la vérification réussit, au moins une partie du reste du réseau de bord, en particulier l'unité de commande (11) et/ou un système de bus (12) éventuellement présent, sont commutés en mode de fonctionnement (10) par la commande de capteur.

3. Procédé selon la revendication 2, **caractérisé en ce que** la commutation de l'unité de commande (11) déclenche un dialogue d'authentification, en particulier par radio, à l'aide d'une clé radio et **en ce que** de préférence lorsque le dialogue d'authentification a réussi et éventuellement après la saisie d'un autre événement de commande par l'ensemble de capteur (1), un ouvrant (14), en particulier un ouvrant arrière (14) du véhicule automobile, est ouvert à l'aide d'un moteur.

4. Procédé selon l'une des revendications précédentes, **caractérisé en ce que** les taux d'échantillonnage de la numérisation de l'évaluation grossière (7) et de l'évaluation fine (9) sont essentiellement identiques ou **en ce que** les taux d'échantillonnage utilisés pour la saisie des valeurs de mesure (5a, 6a) de capteur à partir des signaux (5, 5) de capteur est plus bas lors de l'évaluation grossière (7) que lors de l'évaluation fine (9).

5. Procédé selon l'une des revendications précédentes, **caractérisé en ce que** l'indication de commande est définie comme une première approche de l'utilisateur vers l'ensemble (1) de capteur, qui est détectée dans l'évaluation grossière (7) par le dépassement d'une valeur de seuil (16, 17) par les valeurs de mesure (5a, 6a) de capteur ou par un dépassement d'une pente limite de l'évaluation temporelle des valeurs de mesure (5a, 6a) d'au moins un élément de capteur (2, 3).

6. Procédé selon l'une des revendications précédentes, **caractérisé en ce que** l'indication de commande est définie comme déplacement prédéterminé de l'utilisateur qui est détecté dans l'évaluation fine (9) par l'intermédiaire de l'évolution temporelle des valeurs de mesure (5a, 6a) de capteur.

7. Procédé selon les revendications 5 ou 6, **caractérisé en ce que** l'événement de commande est défini comme déplacement des pieds de l'utilisateur et **en ce que** l'ensemble (1) de capteur présente au moins deux éléments de capteur (2, 3) configurés comme capteurs de proximité disposés dans ou sur une partie arrière d'habillage (18), en particulier sur le parechoc arrière d'un véhicule automobile, et qui s'étendent de préférence sur la plus grande partie de la largeur du véhicule automobile, **en ce que** la zone de saisie d'un élément de capteur (2, 3) est en tout cas orientée également vers l'arrière et **en ce que** la zone de saisie de l'autre élément de capteur (2, 3) est orientée en tout cas également vers le bas.

8. Procédé selon la revendication 7, **caractérisé en ce qu'**un déplacement en va-et-vient du pied de l'utilisateur est défini comme événement de commande et **en ce que** pendant l'événement de commande, les deux éléments de capteur (2, 3) forment une évolution temporelle pulsée des valeurs de mesure (5a, 6a) de capteur, appelée impulsions de capteur.

9. Procédé selon l'une des revendications précédentes, **caractérisé en ce qu'**une série de caractéristiques sont associées à l'évolution, typique de l'événement de commande, des valeurs de mesure (5a, 6a) d'au moins un élément de capteur (2, 3), ces caractéristiques étant d'abord extraites des valeurs de mesure (5a, 6a) de capteur et ensuite classées pour l'évaluation grossière et/ou l'évaluation fine à la manière de la détection d'un motif.

10. Procédé selon la revendication 8 et éventuellement selon la revendication 9, **caractérisé en ce que** les caractéristiques sont définies comme étant la largeur et/ou la hauteur et/ou la pente des flancs et/ou la courbure de parties des impulsions de capteur et/ou comme décalage temporel entre deux impulsions d'un élément de capteur (2, 3).

11. Procédé selon les revendications 8 et 9 et éventuellement selon la revendication 10, **caractérisé en ce que** les caractéristiques sont définies comme décalage temporel des impulsions de deux éléments de capteur (2, 3) et/ou comme corrélation prédéterminée, en particulier comme corrélation croisée, des signaux (5, 6) de deux éléments de capteur.

12. Véhicule automobile doté d'un réseau électrique de bord conçu pour exécuter le procédé selon l'une des revendications précédentes.
